# EUROPEAN PATENT APPLICATION

(11) **EP 4 696 742 A1**
(43) Date of publication of application: **18.02.2026**
(21) Application number: 24806826.4
(22) Date of filing: 13.02.2024
(51) Int. Cl.: C08L 27/12, C08J 3/24, C08K 5/19, C08K 5/42, C08K 5/3445, C09K 3/10

(54) **RUBBER PRODUCT AND METHOD FOR PRODUCING SAME**

(30) Priority: 12.05.2023 JP 2023079467
(71) Applicant: Mitsubishi Cable Industries, Ltd., Chiyoda-ku Tokyo 100-8303 (JP)
(72) Inventor: YAMAMOTO, Tetsuya, Arida-shi, Wakayama 649-0304 (JP); SHIONO, Ichiro, Amagasaki-shi, Hyogo 660-0856 (JP); TOMITA, Mitsuhiro, Amagasaki-shi, Hyogo 660-0856 (JP); ITO, Takao, Amagasaki-shi, Hyogo 660-0856 (JP); HONJO, Hiromasa, Amagasaki-shi, Hyogo 660-0856 (JP)
(74) Representative: Germain Maureau
(86) International application number: PCT/JP2024/004753
(87) International publication number: WO 2024/236871

(57) **Abstract**

A rubber product is made of a crosslinked rubber composition that contains a fluororubber, an ionic liquid, and a filler dispersed in the fluororubber and capable of absorbing the ionic liquid. A concentration of the ionic liquid in the filler is higher than a concentration of the ionic liquid in the fluororubber.

## Description

### TECHNICAL FIELD

The present invention relates to a rubber product and a method for producing the same.

### BACKGROUND ART

It is known that an ionic liquid is introduced into a crosslinked rubber composition that forms a rubber product, thereby controlling the electrical characteristics of the rubber product. For example, Patent Document 1 discloses a sealing member made of a crosslinked rubber composition in which an ionic liquid is blended into a fluororubber.

### CITATION LIST

### PATENT DOCUMENTS

Patent Document 1: Japanese Unexamined Patent Publication No. 2022-1642

### SUMMARY OF THE INVENTION

The prsent invention is directed to a rubber product made of a crosslinked rubber composition that contains a fluororubber, an ionic liquid, and a filler dispersed in the fluororubber and capable of absorbing the ionic liquid, wherein a concentration of the ionic liquid in the filler is higher than a concentration of the ionic liquid in the fluororubber.

The present invention is directed to a method for producing a rubber product, the method comprising: allowing a filler to absorb an ionic liquid; kneading and blending the filler that has absorbed the ionic liquid with a fluororubber to prepare an uncrosslinked rubber composition; and crosslinking the uncrosslinked rubber composition.

### DESCRIPTION OF EMBODIMENTS

An embodiment will be described in detail below.

A rubber product of the embodiment is made of a crosslinked rubber composition X that contains a fluororubber, an ionic liquid, and a filler. The fluororubber is a main component of a base rubber. The filler is dispersed in the fluororubber. The filler is capable of absorbing the ionic liquid. The concentration of the ionic liquid in the filler is higher than the concentration of the ionic liquid in the fluororubber.

The rubber product of the embodiment contains the ionic liquid, thereby obtaining the stable antistatic performance. In addition, if the fluororubber is blended with the ionic liquid, the ionic liquid induces crosslinking inhibition when an uncrosslinked rubber composition is crosslinked so that a crosslinked rubber composition is obtained; but the concentration of the ionic liquid in the filler dispersed in the fluororubber is higher than the concentration of the ionic liquid in the fluororubber, and thus the crosslinking inhibition induced by the ionic liquid can be reduced. This seems because the ionic liquid is localized around the filler such that the ionic liquid has less influence on the fluororubber as a main subject of crosslinking. The distribution of the ionic liquid in the crosslinked rubber composition X can be analyzed by the energy dispersive X-ray spectroscopy (EDS).

The rubber product of the embodiment includes the filler that absorbs the ionic liquid, and thus it is possible to reduce bleeding-out of the ionic liquid. However, in order to obtain stable antistatic performance, the concentration of the ionic liquid in the surface layer of the crosslinked rubber composition X that forms the rubber product suitably increases from the inside toward the surface. The distribution of the ionic liquid in the surface layer of the crosslinked rubber composition X in the depth direction can be analyzed by the time-of-flight secondary-ion mass spectrometry (TOF-SIMS).

Here, examples of the fluororubber include polymer of tetrafluoroethylene (TFE) (PTFE); polymer of vinylidene fluoride (VDF) (PVDF); copolymer of vinylidene fluoride (VDF) and hexafluoropropylene (HFP) (binary FKM); terpolymer of vinylidene fluoride (VDF), hexafluoropropylene (HFP), and tetrafluoroethylene (TFE) (ternary FKM); copolymer of tetrafluoroethylene (TFE) and propylene (Pr) (FEP); terpolymer of vinylidene fluoride (VDF), propylene (Pr), and tetrafluoroethylene (TFE); copolymer of ethylene (E) and tetrafluoroethylene (TFE) (ETFE); terpolymer of ethylene (E), tetrafluoroethylene (TFE), and perfluoromethyl vinyl ether (PMVE); terpolymer of vinylidene fluoride (VDF), tetrafluoroethylene (TFE), and perfluoromethyl vinyl ether (PMVE); copolymer of tetrafluoroethylene (TFE) and perfluoromethyl vinyl ether (PMVE) (FFKM); and copolymer of vinylidene fluoride (VDF) and perfluoromethyl vinyl ether (PMVE). The fluororubber suitably includes one kind or two or more kinds of these substances, and in order to significantly reduce the crosslinking inhibition induced by the ionic liquid, the fluororubber more suitably includes ternary FKM.

The "ionic liquid" in the present application is the salt that is composed of a cation component and an anion component, and its melting point is 100°C or lower.

Examples of the cation component of the ionic liquid include imidazolium-based cation; pyridinium-based cation; aliphatic amine-based cation; and pyrazolium-based cation. Examples of the imidazolium-based cation include 1-ethyl-3-methylimidazolium; 1-methyl-3-methylimidazolium; 1-butyl-3-methylimidazolium; 1-hexyl-3-methylimidazolium; 1-octyl-3-methylimidazolium; 1-methyl-2,3-dimethylimidazolium; 1-butyl-2,3-dimethylimidazolium; 1-hexyl-2,3-dimethylimidazolium; and 1-octyl-2,3-dimethylimidazolium. Examples of the pyridinium-based cation include 1-octyl-4-methyl-pyridinium; 1-methyl-pyridinium; 1-butyl-pyridinium; and 1-hexyl-pyridinium. Examples of the aliphatic amine-based cation include tributylmethylammonium.

Examples of the anion component include bis(fluorosulfonyl)imide-based anion, fluorinated sulfonic acid-based anion, fluorinated carboxylic acid-based anion, thiocyanatebased anion, dicyanamide-based anion, and tetracyanoborate-based anion. Examples of the bis(fluorosulfonyl)imide-based anion include bis(fluorosulfonyl)imide, bis(trifluoromethanesulfonyl)imide, and bis(trifluorobutanesulfonyl)imide. Examples of the fluorinated sulfonic acid-based anion include tetrafluoroborate, hexafluoroborate, and trifluoromethanesulfonate. Examples of the fluorinated carboxylic acid-based anion include trifluoroacetic acid.

The ionic liquid suitably includes one kind or two or more kinds of those cation components and one kind or two or more kinds of those anion components. In order to significantly reduce the crosslinking inhibition induced by the ionic liquid, the cation component of the ionic liquid suitably includes imidazolium-based cation or aliphatic amine-based cation. In order to do the same, the cation component of the ionic liquid suitably includes 1-butyl-3-methylimidazolium in the imidazolium-based cation, and suitably includes tributylmethylammonium as an aliphatic amine-based cation. In order to do the same, the anion component of the ionic liquid suitably includes bis(fluorosulfonyl)imide-based anion, and more suitably includes bis(trifluoromethanesulfonyl)imide in the bis(fluorosulfonyl)imide-based anion.

In order to significantly reduce the crosslinking inhibition induced by the ionic liquid, the content of the ionic liquid in the crosslinked rubber composition X is suitably 0.01 parts by mass or more and 5 parts by mass or less, and more suitably 0.1 parts by mass or more and 1 part by mass or less, with respect to 100 parts by mass of the fluororubber.

Examples of the filler include a resin powder capable of absorbing the ionic liquid and a porous powder. Examples of the resin powder capable of absorbing the ionic liquid include fluororesin powder, phenolic resin powder, polyetherether ketone resin (PEEK) powder, and polyimide resin (PI) powder. Examples of the fluororesin powder include polyvinylidene fluoride resin (PVDF) powder. Examples of the porous powder include carbon black, silica, and zeolite. The filler suitably includes one kind or two or more kinds of these substances, and in order to significantly reduce the crosslinking inhibition induced by the ionic liquid, the filler more suitably includes resin powder, still more suitably includes fluororesin powder, and still more suitably includes PVDF powder. Examples of the commercial PVDF powder include the KYNAR series produced by Arkema S.A.

In order to significantly reduce the crosslinking inhibition induced by the ionic liquid, the density of the filler is suitably 1 g/cm³ or more and 3 g/cm³ or less, and more suitably 1.5 g/cm³ or more and 2 g/cm³ or less. This density of the filler is measured based on ISO1183.

In order to significantly reduce the crosslinking inhibition induced by the ionic liquid, the content of the filler in the crosslinked rubber composition X is suitably 1 part by mass or more and 15 parts by mass or less, and more suitably 3 parts by mass or more and 10 parts by mass or less, with respect to 100 parts by mass of the fluororubber. In order to do the same, the ratio of the content of the filler to the content of the ionic liquid in the crosslinked rubber composition X (the content of the filler/the content of the ionic liquid) is suitably 3 or more and 20 or less, and more suitably 5 or more and 15 or less.

Examples of the crosslinking system of the crosslinked rubber composition X include the peroxide crosslinking system, the polyol crosslinking system, and the amine crosslinking system. In order to significantly reduce the crosslinking inhibition induced by the ionic liquid, the crosslinking system of the crosslinked rubber composition X is suitably the peroxide crosslinking system out of these crosslinking systems. For the peroxide crosslinking system, the uncrosslinked rubber composition X', which is a previous composition of the crosslinked rubber composition X, is blended with peroxide as a crosslinking agent.

Examples of the peroxide as a crosslinking agent include 1,1-bis(t-butylperoxy)-3,5,5-trimethylcyclohexane; 2,5-dimethylhexane-2,5-dihydroperoxide; di-t-butylperoxide; t-butyl cumyl peroxide; dicumyl peroxide; α,α-bis(t-butylperoxy)-p-diisopropylbenzene; 2,5-dimethyl-2,5-di(t-butylperoxy)hexane; 2,5-dimethyl-2,5-di(t-butylperoxy)-hexyne-3; benzoyl peroxide; t-butyl peroxybenzene; t-butyl peroxymaleic acid; t-butyl peroxy isopropylcarbonate; and t-butyl peroxybenzoate. The peroxide as a crosslinking agent suitably includes one kind or two or more kinds of these substances, and in order to significantly reduce the crosslinking inhibition induced by the ionic liquid, the peroxide as a crosslinking agent more suitably includes 2,5-dimethyl-2,5-di(t-butylperoxy)hexane.

In order to significantly reduce the crosslinking inhibition induced by the ionic liquid, the amount of the peroxide as a crosslinking agent blended into the uncrosslinked rubber composition X' is suitably 0.5 parts by mass or more and 5 parts by mass or less, and more suitably 1 part by mass or more and 3 parts by mass or less, with respect to 100 parts by mass of the fluororubber.

The crosslinked rubber composition X may be further crosslinked by a crosslinking aid. Examples of the crosslinking aid include triallyl cyanurate; trimethallyl isocyanurate; triallyl isocyanurate; triacryl formal; triallyl trimellitate; N,N'-m-phenylenebismaleimide; dipropargyl terephthalate; diallyl phthalate; tetraallyl terephthalate amide; triallyl phosphate; bismaleimide; fluorinated triallyl isocyanurate (1,3,5-tris(2,3,3-trifluoro-2-propenyl)-1,3,5-triazin-2,4,6-trione); tris(diallylamine)-S-triazine; triallyl phosphite; N,N-diallyl acrylamide; 1,6-divinyl dodecafluorohexane; hexaallyl phosphoramide; N,N,N',N'-tetraallyl phthalamide; N,N,N',N'-tetraallyl malonamide; trivinyl isocyanurate; 2,4,6-trivinyl methyltrisiloxane; tri(5-norbornene-2-methylene) cyanurate; and triallyl phosphite. The crosslinking aid suitably includes one kind or two or more kinds of these substances, and in order to significantly reduce the crosslinking inhibition induced by the ionic liquid, the crosslinking aid more suitably includes triallyl isocyanurate. In order to do the same, the amount of the crosslinking aid blended into the uncrosslinked rubber composition X' is suitably 0.5 parts by mass or more and 10 parts by mass or less, and more suitably 3 part by mass or more and 7 parts by mass or less, with respect to 100 parts by mass of the fluororubber.

The crosslinked rubber composition X may contain silicone rubber as a component of the base rubber other than the fluororubber. The crosslinked rubber composition X may contain a rubber compounding agent, such as a processing aid, a plasticizer, a processing aid, a vulcanization accelerator, or an antioxidant.

The volume resistivity of the crosslinked rubber composition X is suitably 1.0 × 10¹² Ω·cm or less, and more suitably 1.0 × 10¹¹ Ω·cm or less. This volume resistivity is measured based on JIS K6271-1: 2015.

Specific examples of the rubber product of the embodiment include a sealing member such as an O-ring.

Next, a method for producing the rubber product of the embodiment will be described.

According to the method for producing the rubber product of the embodiment, the filler and the ionic liquid are first mixed so that the filler absorbs the ionic liquid.

Then, the fluororubber is masticated using a rubber mixer, and the filler that has absorbed the ionic liquid and the rubber compounding agent that contains the crosslinking agent are added thereto. Accordingly, the filler that has absorbed the ionic liquid and some materials are kneaded and blended with the fluororubber so that the uncrosslinked rubber composition X' is prepared. At this time, in the resultant uncrosslinked rubber composition X', part of the ionic liquid absorbed by the filler flows and spreads into the fluororubber.

The maximum torque value of the uncrosslinked rubber composition X' is suitably 0.5 N·m or more, and more suitably 1 N·m or more. This maximum torque value is determined based on a vulcanization curve obtained by the Curelastometer (a registered trademark) in accordance with JIS K6300-2: 2001.

Then, the uncrosslinked rubber composition X' is molded into a predetermined shape, and is held at a predetermined temperature and a predetermined pressure for a predetermined time so as to be crosslinked, whereby the rubber product of the embodiment made of the crosslinked rubber composition X is obtained. The obtained rubber product may be subjected to a secondary crosslinking process in which it is held in an atmosphere at a predetermined temperature for a predetermined time and/or a radiation crosslinking process in which it is irradiated with radiation.

### [Examples]

### (O-Ring)

O-rings of Examples 1 and 2 and Comparative Example were produced. The elements of the crosslinked rubber composition that forms each of the O-rings will be shown in Table 1.

### <Example 1>

The ternary FKM (Tecnoflon P459 by SOLVAY S.A.) of the fluororubber was used as a base rubber. First, with respect to 100 parts by mass of this ternary FKM, 5 parts by mass of the filler, which was the PVDF powder (Kynar MG15 by Arkema S.A.; the density: 1.78 g/cm³), and 0.5 parts by mass of the ionic liquid A, which was 1-butyl-3-methylimidazolium bis(trifluoromethanesulfonyl)imide (BMI-N111 by Mitsubishi Materials Corporation), were mixed so that the PVDF powder absorbed the ionic liquid A. Then, with respect to 100 parts by mass of the ternary FKM, 1.5 parts by mass of the crosslinking agent, which was 2,5-dimethyl-2,5-di(t-butylperoxy)hexane (PERHEXA 25B by NOF Corporation), and 3 parts by mass of the crosslinking aid, which was triallyl isocyanurate (TAIC by Nippon Kasei Chemical Co., Ltd.), as well as the PVDF powder that had absorbed the ionic liquid A, were blended and kneaded, whereby an uncrosslinked rubber composition was prepared. Then, this uncrosslinked rubber composition was crosslinked by press molding, whereby an O-ring made of the crosslinked rubber composition was produced. This O-ring was named Example 1.

### <Example 2>

An O-ring that had the same configuration as that of Example 1 was produced and named Example 2, except that the ionic liquid A was replaced with the ionic liquid B, which was tributylmethylammonium bis(trifluoromethanesulfonyl)imide (FC-4400 by 3M Japan Co., Ltd.).

### <Comparative Example>

An O-ring that had the same configuration as that of Example 2 was produced and named Comparative Example, except that the PVDF powder was not blended while the ionic liquid B was directly blended into the ternary FKM.

**[Table 1]**

| | Example 1 | Example 2 | Comparative Example |
|---|---|---|---|
| ternary FKM | 100 | 100 | 100 |
| Ionic Liquid A | 0.5 | | |
| Ionic Liquid B | | 0.5 | 0.5 |
| PVDF powder | 5 | 5 | |
| Peroxide | 1.5 | 1.5 | 1.5 |
| TAIC | 3 | 3 | 3 |
| PVDF powder/Ionic Liquid | 10 | 10 | - |

### (Test Method and Results)

### <Maximum Torque Value>

The vulcanization curve of the uncrosslinked rubber composition used to produce the O-ring of each of Examples 1 and 2 and Comparative Example was obtained using a curelastometer. Then, the maximum torque value was determined based on that vulcanization curve in accordance with JIS K6300-2: 2001. The results are shown in Table 2.

**[Table 2]**

| | Example 1 | Example 2 | Comparative Example |
|---|---|---|---|
| Maximum Torque Value N·m | 1.51 | 1.65 | 0.18 |

Table 2 shows that the maximum torque value is high in Example 1 in which the PVDF powder absorbed the ionic liquid A and Example 2 in which the PVDF powder absorbed the ionic liquid B, whereas the maximum torque value is extremely low in Comparative Example in which the PVDF powder was not used. This seems because in Comparative Example, the crosslinking inhibition was induced by the ionic liquid, whereas in Examples 1 and 2, the PVDF powder absorbed the ionic liquid, thereby reducing the crosslinking inhibition being induced by the ionic liquid.

### <SEM Observation and EDS Analysis>

For the O-ring of each of Examples 1 and 2 and Comparative Example, a circular sample of the crosslinked rubber composition that was shaped in a thin film with a thickness of about 1 µm was cut out. Then, a center part and a surface layer part of this sample and a middle part between the center part and the surface layer part were observed by scanning electron microscopy (SEM) and analyzed by energy dispersive X-ray spectroscopy (EDS).

The observation result and the analysis result revealed that in Examples 1 and 2, a sea-island structure in which the islands of the PVDF powder were dispersed in the sea of the ternary FKM was observed. In addition, the analysis revealed that the O concentration and the S concentration were higher in the islands of the PVDF powder than in the sea of the ternary FKM. This is attributed to bis(trifluoromethanesulfonyl)imide, which is the anion component of the ionic liquid, and indicates that the ionic liquid is localized and the concentration of the ionic liquid in the PVDF powder is higher than the concentration of the ionic liquid in the ternary FKM. Further, the analysis revealed that the F concentration was lower in the islands of the PVDF powder than in the sea of the ternary FKM. This is consistent with the fact that the F content in the ternary FKM is 68% by mass, whereas the F content in the PVDF is 59.4% by mass. In contrast, in Comparative Example, the sea-island structure observed in Examples 1 and 2 was not observed, and the analysis also did not show that the O concentration and the S concentration were localized.

### <TOF-SIMS Analysis>

For the O-ring of Example 1, the surface layer of the crosslinked rubber composition was analyzed in the depth direction by time-of-flight secondary ion mass spectrometry (TOF-SIMS).

The depth profile of the analysis result revealed that in the surface layer of the crosslinked rubber composition up to a depth of 18 nm from the surface, the concentration of the ionic liquid increased from the inside toward the surface, and that the concentration difference was a maximum of approximately 10 times.

### INDUSTRIAL APPLICABILITY

The present invention is useful in the technical field of a rubber product and a method for producing the same.

## Claims

1. A rubber product made of a crosslinked rubber composition that contains a fluororubber, an ionic liquid, and a filler dispersed in the fluororubber and capable of absorbing the ionic liquid,
wherein
a concentration of the ionic liquid in the filler is higher than a concentration of the ionic liquid in the fluororubber.

2. The rubber product of claim 1, wherein
in a surface layer of the crosslinked rubber composition, a concentration of the ionic liquid increases from an inside toward a surface.

3. The rubber product of claim 1 or 2, wherein
the fluororubber includes terpolymer of vinylidene fluoride, hexafluoropropylene, and tetrafluoroethylene.

4. The rubber product of any one of claims 1 to 3, wherein
a cation component of the ionic liquid includes imidazolium-based cation or aliphatic amine-based cation.

5. The rubber product of claim 4, wherein
the cation component of the ionic liquid includes 1-butyl-3-methylimidazolium.

6. The rubber product of claim 4, wherein
the cation component of the ionic liquid includes tributylmethylammonium.

7. The rubber product of any one of claims 1 to 6, wherein
an anion component of the ionic liquid includes bis(fluorosulfonyl)imide-based anion.

8. The rubber product of claim 7, wherein
the anion component of the ionic liquid includes bis(trifluoromethanesulfonyl)imide.

9. The rubber product of any one of claims 1 to 8, wherein
a content of the ionic liquid in the crosslinked rubber composition is 0.01 parts by mass or more and 5 parts by mass or less with respect to 100 parts by mass of the fluororubber.

10. The rubber product of any one of claims 1 to 9, wherein
the filler includes a polyvinylidene fluoride resin powder.

11. The rubber product of any one of claims 1 to 10, wherein
a content of the filler in the crosslinked rubber composition is 1 part by mass or more and 15 parts by mass or less with respect to 100 parts by mass of the fluororubber.

12. The rubber product of any one of claims 1 to 11, wherein
a ratio of the content of the filler to the content of the ionic liquid in the crosslinked rubber composition is 3 or more and 20 or less.

13. The rubber product of any one of claims 1 to 12, wherein
a crosslinking system of the crosslinked rubber composition is a peroxide crosslinking system, and peroxide as a crosslinking agent includes 2,5-dimethyl-2,5-di(t-butylperoxy)hexane.

14. The rubber product of any one of claims 1 to 13, wherein
the rubber product is a sealing member.

15. A method for producing a rubber product, the method comprising:
allowing a filler to absorb an ionic liquid; kneading and blending the filler that has absorbed the ionic liquid with a fluororubber to prepare an uncrosslinked rubber composition; and crosslinking the uncrosslinked rubber composition.
